Europäisches Patentamt

European Patent Office

Office européen des brevets

(11) Veröffentlichungsnummer: **0 282 787**

**A2**

## (12) EUROPÄISCHE PATENTANMELDUNG

(21) Anmeldenummer: 88102833.6

(22) Anmeldetag: 25.02.88

(51) Int. Cl.⁴: **G06F 9/46**

(30) Priorität: 18.03.87 DE 3708830

(43) Veröffentlichungstag der Anmeldung:
21.09.88 Patentblatt 88/38

(84) Benannte Vertragsstaaten:
AT BE CH DE FR GB IT LI NL SE

(71) Anmelder: **Siemens Aktiengesellschaft Berlin
und München**
**Wittelsbacherplatz 2**
**D-8000 München 2(DE)**

(72) Erfinder: **Sorgenfrei, Heiko Dr., Dipl.-Ing.**
**Ludwig-Thoma-Strasse 13**
**D-8029 Sauerlach-Grafing(DE)**

(54) **Verwaltungseinheit für die Verwaltung der Arbeitsspeicher eines
Multirechner-Datenverarbeitungssystems.**

(57) Die nichtstatisch vergebenen Teile (SD) der Arbeitsspeicher (S) der Rechner werden im Zuge jeder Prozeßabwicklung fortschreitend dem jeweiligen Bedarf entsprechend aus freien Teilen der Speicher vergeben und in entsprechender Weise im Anschluß an die abgeschlossene Abwicklung einzelner Prozeduren des Prozesses auch sofort wieder freigegeben. Hierdurch gegenüber einer Vorabvergabe des Speicherplatzes für den ganzen Prozeß Verringerung der Gefahr eines Überlaufs bzw. Vermeidung der Notwendigkeit den Speicherplatz für den Extremfall dimensionieren zu müssen.

FIG 1

## Verwaltungseinheit für die Verwaltung des Arbeitsspeichers eines Multirechner-Datenverarbeitungssystems.

Die Erfindung betrifft eine Verwaltungseinheit für die Verwaltung der Arbeitsspeicher eines Multirechner-Datenverarbeitungssystems, insbesondere Nachrichten-Vermittlungssystems, bei dem die abzuwickelnden Steuerfunktionen so weitgehend dezentral auf die Prozessoren verteilt sind, daß ein einzelner Prozessor als Ausfalleinheit hingenommen werden kann, und bei dem eine Vielzahl miteinander kommunizierender Prozesse in zeitlicher Verschachtelung parallel zueinander abzuwickeln sind.

Rechnergesteuerte Nachrichten-Vermittlungssysteme wurden ursprünglich aus wirtschaftlichen Gründen durch eine einzige zentrale Steuerung betrieben, die aus Sicherheitsgründen allerdings gedoppelt sein mußte. Die Schwierigkeiten, die sich wegen der großen Vielzahl von Rechenschritten ergaben, die eine solche zentrale Steuerung auszuführen hat, und die günstige Preisentwicklung für Mikroprozessoren führte in der jüngeren Zeit zu Systemkonzepten, bei denen eine gewisse Dezentralisierung in der Weise vorgenommen ist, daß Mikroprozessoren als Peripheriesteuerwerke eingesetzt werden, die eine Datenvorverarbeitung übernehmen und damit die zentrale Steuerung entlasten. Die nach wie vor vorhandene zentrale Steuerung ist aber auch hier noch ein Engpaß, der die Anzahl der an ein solches System maximal anschließbaren Teilnehmer beschränkt.

Es ist daher schon ein Nachrichten-Vermittlungssystem vorgeschlagen worden, bei dem eine einzelne Vermittlungsstelle aus kleinen selbständigen Einheiten besteht, die ihrerseits wie eine vollständige Vermittlungsstelle fungieren und mit anderen solcher Einheiten der Vermittlungsstelle eine hierarchische Gliederung bilden, wie sie bei üblichen aus End-, Knoten-, Haupt-und Zenral vermittlungsstellen aufgebaute Nachrichtennetzen vorhanden ist. Die einzelnen Prozessoren stellen dabei Ausfalleinheiten dar, d. h. die durch ihren Ausfall bedingte Beeinträchtigung des Vermittlungsbetriebs ist derart geringfügig, daß auf eine Doppelung verzichtet werden kann.

Bei einem derartigen Nachrichten-Vermittlungssystem bzw. bei einem entsprechend gegliederten Datenverarbeitungssystem sind eine Vielzahl jeweils durch einen Prozessor gesteuerter miteinander kommunizierender Prozesse abzuwickeln, die zeitlich verschachtelt sind.

Besondere Bedeutung kommt in diesem Zusammenhang der Verwaltung des dynamisch vergebenen Teils des Arbeitsspeichers an die einzelnen Prozesse zu, bei der es sich um eine kellertige Verwaltung (First In Last Out; Stack) handelt.

Der dynamisch vergebene Teil des Arbeitsspeichers enthält die Parameter und die lokalen Variablen der einzelnen Prozesse, wogegen die globalen Daten und der Gesamtcode im statisch vergebenen Teil enthalten sind.

Bei der dynamischen Vergabe von Arbeitsspeicherplatz wurde bisher so vorgegangen, daß beim Start eines Prozesses diesem Prozess ein Speicherbereich (Stack) zugewiesen wurde, der so groß bemessen war, daß er in jedem Falle eine für diesen Prozess ausreichende Kapazität aufwies. Da die erforderliche Kapazität von der Art der im Zuge dieses Prozesses abzuwickelnden und in der Regel externen Prozeduren (Unterprogramme) abhängig ist und die Realisierung der Prozeduren im einzelnen und damit der erforderliche Speicherbedarf in der Regel nicht bekannt sind, ist eine solche Speicherplatzbemessung nach angenommenem Maximalbedarf einerseits nie ganz sicher, d. h. ein Stacküberlauf kann nicht ausgeschlossen werden, andererseits führt sie häufig dazu, daß unnötig viel Speicherplatz reserviert wird.

Bei bisher bekannten Speicherverwaltungen war es außerdem so, daß die Zuweisung von Arbeitsspeicherteilen für die gesamte Lebensdauer des Prozesses, d. h. so lange aufrechterhalten blieb, bis das betreffende Programm vollständig abgewickelt war mit der Folge, daß in Wartezeiten, in denen ein Prozess einen nur sehr geringen Speicherbedarf hat, ein beträchtlicher Anteil des Arbeitsspeichers zwar nicht ausgenutzt war, aber auch nicht für andere Prozesse zur Verfügung stand.

Die Aufgabe der Erfindung besteht darin, eine Verwaltungseinheit für die Verwaltung des Arbeitsspeichers eines Multirechner-Datenverarbeitungssystems dahingehend zu verbessern,. daß solche Nachteile der Blockierung freien Arbeitsspeicherplatzes und des nicht mit Sicherheit ausgeschlossenen Überlaufs des einem Prozess zugewiesenen Arbeitsspeicheranteiles vermieden werden.

Erfindungsgemäß wird diese Aufgabe dadurch gelöst, daß eine solche Verwaltungseinheit die nicht statisch vergebenen und kellerartig verwalteten Teile des Arbeitsspeichers, die während der Abwicklung von Prozessen deren Parameter und lokalen Variablen enthalten, im Zuge jeder Prozessabwicklung fortschreitend dem jeweiligen Bedarf entsprechend durch Zuweisung von freien Teilen des Arbeitsspeichers vergibt und in entsprechender Weise im Anschluß an die abgeschlossene Abwicklung einzelner Prozeduren des jeweiligen Prozesses auch sofort wieder freigibt.

Beim Betrieb der erfindungsgemäßen Verwaltungseinheit wird also beim Start eines Prozesses nicht der mutmaßlich benötigte gesamte Teil des Arbeitsspeichers zugewiesen, sondern jeweils nur so viel Arbeitsspeicherplatz, wie es dem aktuellen Bedarf entspricht.

Da, wie dargelegt, jeweils mehrere miteinander kommunizierende Prozesse quasi parallel ablaufen, bedeutet dies, daß die einem Prozeß nach und nach zugewiesenen Teile des Arbeitsspeichers nicht in einem zusammenhängenden Stück desselben liegen, sondern beliebig über diesen verteilt sind. Es wird auch nicht der gesamte für einen Prozeß benötigte Teil des Arbeitsspeichers belegt gehalten, sondern jeweils im Anschluß an die abgeschlosse ne Abwicklung einer Prozedur eines Prozesses wird der für diese Prozedur ausgenutzte Teil des Arbeitsspeichers wieder freigegeben, um für Prozeduren anderer Prozesse wieder zur Verfügung zu stehen.

Die erfindungsgemäßen Eigenschaften der Verwaltungseinheit erfordern allerdings zusätzliche dynamische Rechenschritte gegenüber der vorerwähnten Zuteilungsprozedur, wegen der vorausgesetzten weitgehenden Dezentralisierung und der damit verbundenen großen Anzahl von an dem System beteiligten Prozessoren erwachsen hieraus jedoch keine Schwierigkeiten.

Gemäß einer weiteren Ausgestaltung der Erfindung nimmt die Verwaltungseinheit die Zuweisung aus einem zusammenhängenden nichtstatisch vergebenen Teil des Arbeitsspeichers vor, das bedeutet, daß ein erster zusammenhängender Teil des Arbeitsspeichers statisch vergeben ist und aus einem zweiten sich daran anschließenden zusammenhängenden Teil die Zuweisung vorgenommen wird. Es ergeben sich hieraus organisatorische Vorteile.

Noch eine andere Ausgestaltung der Erfindung geht dahin, für die einzelnen Prozeduren eines Prozesses jeweils einen zusammenhängenden Teil des nichtstatisch vergebenen Teils des Arbeitsspeichers zuzuweisen, wozu die Verwaltungseinheit, sofern ein solcher in ausreichender Größe zunächst nicht existiert, durch Umkopieren des Inhalts freie Speicherteile unterbrechender belegter Zwischenbereiche solche zusammenhängende freie Speicherteile schafft. Der für einen Prozeß zugewiesene Teil des Arbeitsspeichers besteht zwar, wie dargelegt, aus Teilen des Arbeitsspeichers, die nicht in einem zusammenhängenden Stück liegen. Der für eine einzelne Prozedur eines Prozeß benötigte Teil des Arbeitsspeichers ist dann aber ein zusammenhängendes Arbeitsspeicherstück, das in der angegebenen Weise durch die erfindungsgemäße Verwaltungseinheit unter Umständen erst geschaffen wird. Nachstehend wird die Erfindung anhand eines Ausführungsbeispiels unter Bezugnahme auf eine Zeichnung ·näher erläutert.

In der Zeichnung zeigen:

FIG 1 eine Prinzipdarstellung der Vermittlungsstelle eines im Sinne der für die Erfindung angenommenen Voraussetzungen dezentralen Nachrichten-Vermittlungssystems.

FIG 2 ein Gruppierungsschema für eine derartige Vermittlungsstelle.

FIG 3 das Prinzipbild der kleinsten Vermittlungseinheit einer solchen Vermittlungsstelle.

FIG 4 das Strukturbild eines Arbeitsspeichers.

FIG 5 und 6 detaillierte Strukturbilder solcher Arbeitsspeicher.

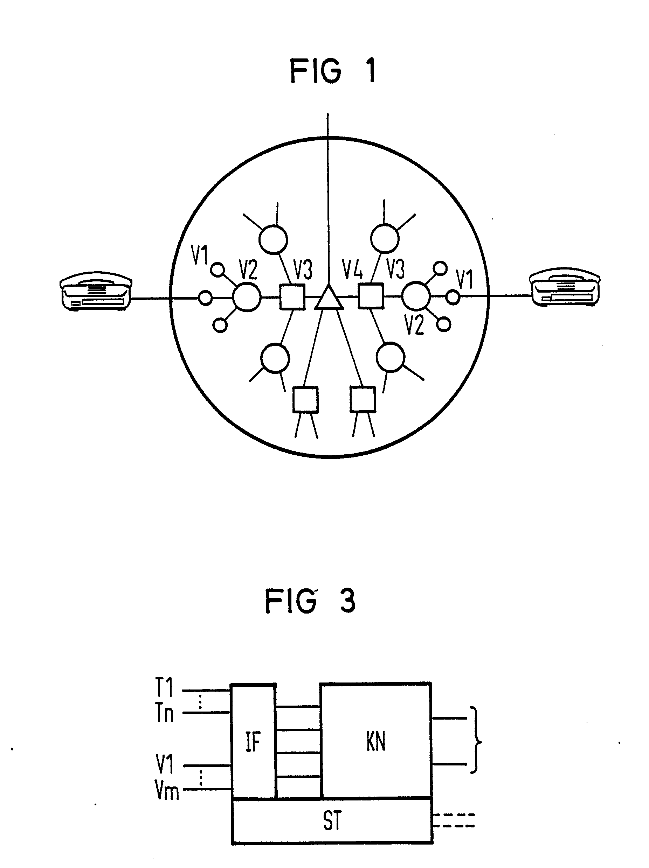

Wie die FIG 1 zeigt, besteht eine Vermittlungsstelle eines dezentralen Nachrichten-Vermittlungssystems ihrerseits aus kleinen selbständigen EinheitenV1 bis V4, die jeweils für sich wie eine Vermittlungseinheit arbeiten und innerhalb einer Vermittlungsstelle V wie in einem hierarchisch gegliederten Nachrichtennetz, das aus End-, Knoten-, Haupt-und Zentralvermittlungsstellen besteht, miteinander verbunden sind.

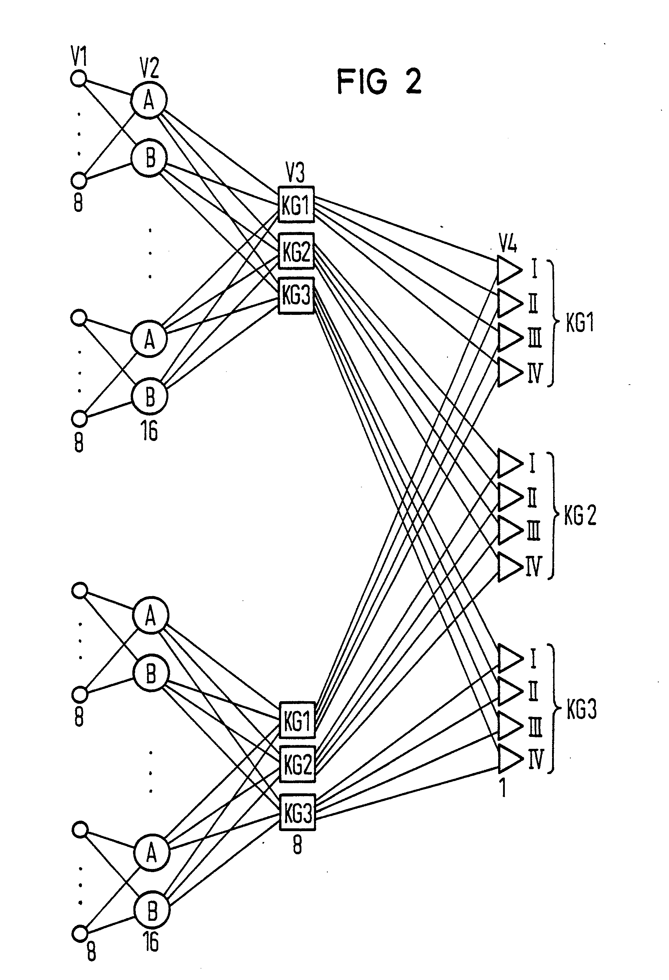

Die FIG 2 zeigt ein Beispiel, wie die Vermaschung der einzelnen Vermittlungseinheiten untereinander aussehen kann.

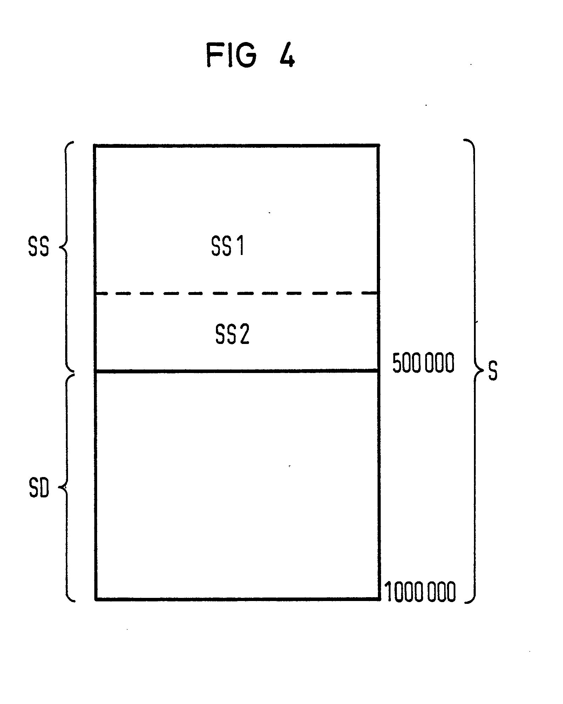

Das Prinzip einer Vermittlungseinheit V1 zeigt FIG 3, wonach eine solche Grundeinheit aus einer Schnittstelleneinheit IF, über die Teilnehmeranschlußleitungen und/oder Verbindungsleitungen angeschlossen sind, aus einem Koppelnetz KN sowie aus einem Mikroprozessor ST. Die übrigen Einheiten V2 bis V4 in den FIG 1 und 2 sind jeweils aus einer Vielzahl solcher Grundeinheiten zusammengesetzt.

Die Vermittlungsstelle eines dezentralen Nachrichten-Vermittlungssystems stellt also ein Multirechner-Datenverarbeitungssystem dar, bei dem die abzuwickelnden Steuerfunktionen so weitgehend dezentral auf die einzelnen Prozessoren ST verteilt sind, daß ein solcher Prozessor als Ausfalleinheit hingenommen werden kann.

Die einzelnen Prozessoren haben in nichtdargestellter Weise Zugriff zu einem Arbeitsspeicher, der durch die erfindungsgemäße Verwaltungseinheit verwaltet wird.

Wie die FIG 4 zeigt, ist ein solcher Arbeitsspeicher in einen statischen Bereich SS sowie in einen dynamischen Bereich SD gegliedert. Der statische Bereich SS ist seinerseits wieder unterteilt in einen Bereich SS1, der den Code für den Gesamtablauf der Vermittlungsstellensteuerung aufnimmt, und in einem Bereich SS2, der der Speicherung globaler Daten dient.

Der dynamische Bereich SD dient der Aufnahme der Parameter und lokalen Variablen der einzelnen Prozesse, die durch die Prozessoren ST im Zuge der Herstellung, Aufrechterhaltung und Auslösung einer bestimmten Verbindung durch die Vermittlungsstelle auszuführen sind. Die Verwaltung dieses Teils des Arbeitsspeichers ist die eigentliche Aufgabe der erfindungsgemäßen Verwaltungseinheit.

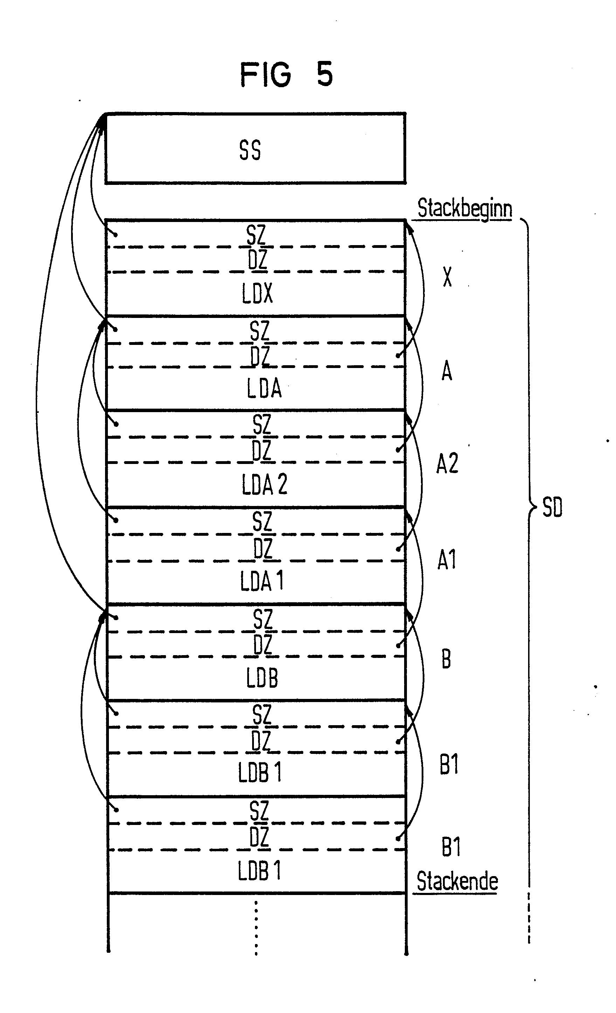

Wenn beispielsweise von einem Prozess X, also im Zuge der Abwicklung eines bestimmten Programms, das die Prozeduren, also Programmbausteine, A und B mit jeweils den inneren Prozeduren A1, A2 sowie B1 und B2 umfaßt, zunächst die Prozedur A aufgerufen und danach nacheinander die Prozeduren A2, A1, B und B1 und dann nochmals die Prozedur B1 aufgerufen wird, dann ergibt sich für diesen Prozess X eine Belegung des dynamischen Teils des Arbeitsspeichers, wie sie FIG 5 zeigt. Danach sind zwischen einem Stackbeginn und einem Stackende im dynamisch vergebenen Teil SD des Speichers Bereiche für X, A, A2, A1, B, B1 und nochmals B1 vergeben. Diese Bereiche enthalten in den Bereichsteilen LDX, LDA...LDB1 die lokale Daten des Prozesses X bzw. der erwähnten Prozeduren. Weitere Bereichsteile SZ bzw. DZ ent halten einen dynamischen bzw. einen statischen Zeiger. Der dynamische Zeiger zeigt stets auf den Beginn der dynamisch vorhergehenden Speicherregion, dient also der Verwaltung des zwischen Stackanfang und Stackende liegenden Bereichs des Arbeitsspeichers. Der statische Speicher zeigt immer auf den Beginn des Speicherbereichs, der zu der übergeordneten Prozedur gehört. Die statischen Zeiger der Speicherbereiche dieser übergeordneten Prozeduren verweisen in den statischen Teil SS des Arbeitsspeichers, in dem die für den Prozess X maßgeblichen globalen Daten enthalten sind.

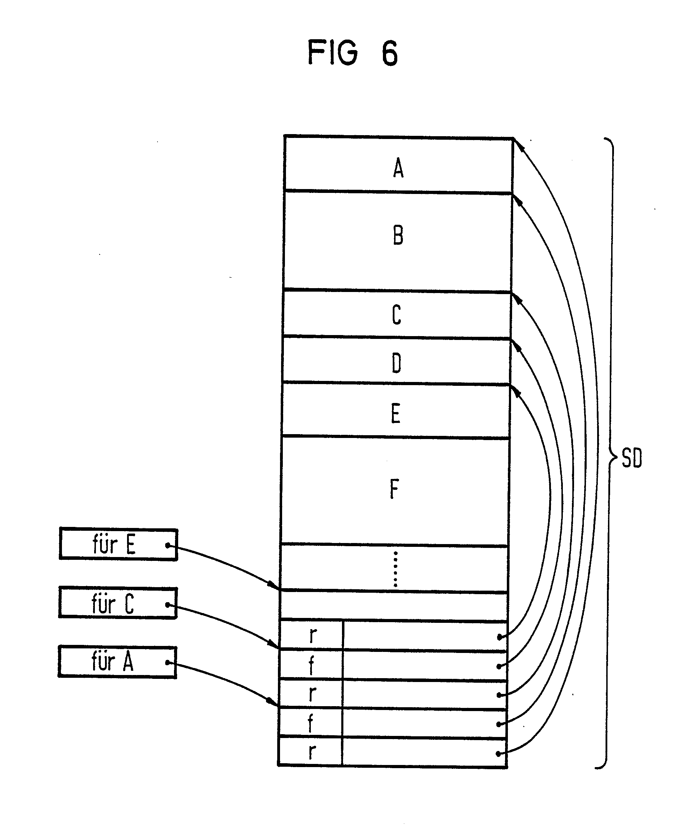

Die Zuweisung des zwischen Stackanfang und Stackende liegenden Teils des Arbeitsspeichers durch die erfindungsgemäße Verwaltungseinheit ist nun aber nicht in der Weise erfolgt, daß beim Start des Prozesses X diesem von vorneherein der gesamte Bereich zugeschaltet worden ist, die Zuweisung erfolgte vielmehr fortschreitend dem jeweiligen Bedarf entsprechend, wobei die jeweils zugewiesenen Teile nicht aus einem zusammenhängenden Stück des Arbeitsspeichers stammen. Die Speicherverwaltung ist darüber hinaus derart, daß bei Beendigung einer Prozedur der entsprechende Speicherbereich wieder freigegeben wird. Insoweit ist die FIG 5 natürlich nicht als reale "Momentaufnahme" der Arbeitsspeicherbelegung zu verstehen. Wie FIG 6 zeigt, werden sich vielmehr im Arbeitsspeicherteil SD für dynamische Belegung belegte Bereiche (z.B. A, C, E) und nichtbelegte Bereiche (z.B. B, D, F) abwechseln, wobei die relative Nachbarschaft belegter Teile nichts mit der Zugehörigkeit zum selben Prozess zu tun hat. Die FIG 6 zeigt außerdem noch eine Besonderheit der Arbeitsweise der erfindungsgemäßen Verwaltungseinheit, die darin liegt, daß der Teil SD von oben her bis z.B. zur Mitte hin durch Vergabe der eigentlichen benötigten Speicherstücke belegt wird und von der anderen Seite her für Zeiger belegt wird, die jeweils auf einen solchen im oberen Teil befindlichen Bereich des Arbeitsspeichers zeigen. Ein Zugriff auf Bereiche des Arbeitsspeichers erfolgt also jeweils über solche internen Zeiger.

Wie schon dargelegt, liegen die Speicherbereiche, die zu einem bestimmten Prozess gehören, nicht in einem zusammenhängenden Bereich des Arbeitsspeichers. Dies gilt jedoch nicht für den Speicherraum, der für eine einzelne Prozedur eines Prozesses zur Verfügung gestellt wird. Es muß daher vor einer Zuweisung von Speicherraum an eine Prozedur unter Umständen erst ein ausreichend großes zusammenhängendes Speicherstück geschaffen werden. Wenn bei einer Arbeitsspeicherbelegung, wie sie in FIG 6 als Beispiel veranschaulicht ist, der Bereich F vergeben werden soll, dieser aber für die entsprechende Prozedur nicht ausreichend groß ist, dann muß zunächst eine Bereinigung des Arbeitsspeichers durch die Speicherverwaltungseinheit vorgenommen werden. Dies geschieht in der Form, daß zunächst der Inhalt des belegten Speicherbereichs C an den Anfang des freien Speicherbereichs B kopiert wird, so daß der verbleibende Teil des Bereichs B, der Bereich C und der Bereich D nunmehr einen zusammenhängenden Bereich D bilden. In entsprechender Weise wird der Inhalt des Bereichs E an den Anfang des letztgenannten entstandenen freien Bereichs kopiert, so daß sich die Bereiche E und F als Fortsetzung an den Freibereich anschließen.

## Ansprüche

1. Verwaltungseinheit für die Verwaltung der Arbeitsspeicher eines Multirechner-Datenverarbeitungssystems, insbesondere Nachrichten-Vermittlungssystems, bei dem die abzuwickelnden Steuerfunktionen so weitgehend dezentral auf die Prozessoren verteilt sind, daß ein einzelner Prozessor als Ausfalleinheit hingenommen werden kann, und bei dem eine Vielzahl miteinander kommunizierender Prozesse in zeitlicher Verschachtelung parallel zueinander abzuwickeln ist, **dadurch gekennzeichnet,** daß sie die nichtstatisch vergebenen und kellerartig verwalteten Teile (SD) des Arbeitsspeichers (S), die während der Abwicklung von Prozessen deren Parameter und lokale Variablen enthalten, im Zuge jeder Prozessabwicklung fortschreitend dem jeweiligen Bedarf entsprechend durch Zuweisung von freien Teilen des Arbeitsspeichers vergibt und in entsprechender Weise im Anschluß an die abgeschlossene Abwicklung einzelner Prozeduren des jeweiligen Prozesses auch sofort wieder freigibt.

2. Verwaltungseinheit nach Anspruch 1, **dadurch gekennzeichnet**, daß sie die Zuweisung aus einem zusammenhängenden nichtstatisch vergebenen Teil (SD) des Arbeitsspeichers vornimmt.

3. Verwaltungseinheit nach Anspruch 1 oder 2, **dadurch gekennzeichnet**, daß sie für die einzelnen Prozeduren eines Prozesses jeweils einen zusammenhängenden Teil des nichtstatisch vergebenen Teils des Arbeitsspeichers zuweist, wozu sie, sofern ein solcher in ausreichender Größe zunächst nicht existiert, durch Umkopieren des Inhalts freie Speicherteile (z.B. B, D, F) unterbrechender belegter Zwischenbereiche (z.B. C, E) solche zusammenhängenden freien Speicherteile - schafft (Fig. 3).

# FIG 1

V1 V2 V3 V4 V3 V1 V2

# FIG 3

T1
Tn

V1
Vm

IF

KN

ST

# FIG 2

# FIG 4

FIG 5

# FIG 6